# FASCICULE DE BREVET EUROPEEN

(11) **EP 3 041 660 B1**
(45) Date de publication et mention de la délivrance du brevet: **07.06.2017**
(21) Numéro de dépôt: 14758865.1
(22) Date de dépôt: 02.09.2014
(51) Int. Cl.: B29C 49/42

(54) **PROCÉDÉ D'ÉJECTION D'UN RÉCIPIENT PORTÉ PAR UN MANDRIN PAR BUTÉE D'UNE FACE D'ÉJECTION CONTRE UNE FACE DE BUTÉE DU COL AGENCÉE SOUS LE BUVANT DU RÉCIPIENT**
VERFAHREN ZUM AUSSTOSSEN EINES VON EINEM DORN GETRAGENEN BEHÄLTERS DURCH ABSTÜTZUNG EINER EJEKTIONSFLÄCHE GEGEN EINE TRAGEFLÄCHE DES HALSES UNTER DER ÖFFNUNG DES BEHÄLTERS
METHOD FOR EJECTING A VESSEL CARRIED BY A MANDREL BY ABUTMENT OF AN EJECTION FACE AGAINST A BEARING FACE OF THE NECK ARRANGED UNDER THE MOUTH OF THE VESSEL

(30) Priorité: 02.09.2013 FR 1358361
(43) Date de publication de la demande: 13.07.2016
(73) Titulaire: Sidel Participations, 76930 Octeville-sur-Mer (FR)
(72) Inventeur: MORIN, Stéphane, F-76930 Octeville sur Mer (FR); HEUZEBROC, Pierre, F-76930 Octeville sur Mer (FR)
(74) Mandataire: Grassin d'Alphonse, Emmanuel Jean Marie
(86) Numéro de dépôt international: PCT/EP2014/068567
(87) Numéro de publication internationale: WO 2015/028679

(56) Documents cités:
- EP-A1- 2 626 177
- US-A- 5 769 476

## Description

### DOMAINE TECHNIQUE DE L'INVENTION

L'invention concerne un procédé d'éjection d'un récipient, notamment d'une préforme en matériau thermoplastique, porté par un dispositif de transport, dans lequel le récipient est muni d'un col cylindrique d'axe vertical comportant un bord d'extrémité supérieure libre appelé buvant.

L'invention concerne aussi un dispositif de transport adapté pour la mise en oeuvre du procédé d'éjection réalisé selon les enseignements de l'invention.

### ARRIERE PLAN TECHNIQUE DE L'INVENTION

L'invention concerne plus particulièrement un procédé d'éjection d'un récipient, notamment d'une préforme en matériau thermoplastique, porté par un dispositif de transport, dans lequel le récipient est muni d'un col cylindrique d'axe vertical comportant un bord d'extrémité supérieure libre appelé buvant, le dispositif de transport comportant :
- au moins un support mobile le long d'un trajet ;
- au moins un mandrin de préhension du récipient par emboîtement vertical avec le col, le mandrin de préhension étant monté rotatif sur le support mobile pour permettre la rotation du récipient autour de l'axe du col lors de son transport ;
- une face inférieure d'éjection qui est montée sur le support mobile, le mandrin de préhension étant monté coulissant verticalement relativement à la face d'éjection pour permettre d'extraire le mandrin de préhension du col lors de son coulissement relatif par contact de la face d'éjection avec une face supérieure de butée verticalement en vis-à-vis du col, le mandrin de préhension étant coulissant relativement à la face d'éjection entre une position inférieure de transport dans laquelle l'emboîtement du mandrin de préhension avec le col est permis, et une position supérieure d'éjection du récipient dans laquelle la face d'éjection interdit l'emboîtement du mandrin de préhension avec le col par butée contre la face de butée du col.
La publication EP 2 626 177 A1 divulgue un procédé d'éjection d'un récipient selon le préambule de la revendication 1, ainsi qu'un dispositif de transport selon le préambule de la revendication 3. Il est connu de fabriquer des récipients en matériau thermoplastique par formage de préformes, par exemple par soufflage ou par étirage-soufflage.

Les préformes sont généralement fabriquées par injection. Une préforme présente un corps qui est destiné à être étiré pour être conformé en récipient final lors de l'opération de formage. Le col de la préforme présente déjà sa forme définitive. Il est donc important de protéger le col tout au long du processus de transformation de la préforme en récipient final.

Pour réaliser l'opération de formage, il est nécessaire de chauffer préalablement le corps des préformes à une température de transition vitreuse afin de le rendre malléable. Les installations de fabrication en série de récipients comportent à cet effet des fours de chauffage des préformes.

Un four de chauffage présente généralement la forme d'un tunnel dans lequel au moins l'une des parois comporte des moyens de chauffage. Les préformes défilent le long du tunnel devant les moyens de chauffage en tournant sur elles-mêmes afin que leur corps soit chauffé de manière uniforme à une température adaptées pour l'opération de formage.

A cet effet, le four comporte un dispositif de transport des préformes qui se présentent généralement sous la forme d'une chaîne fermée dont chaque maillon forme un support mobile qui est muni de moyens de préhension d'une préforme.

Chaque préforme est saisie au moyen d'un mandrin qui est emboîté avec le col de la préforme. Le mandrin est par exemple formé par un mandrin à expansion radiale qui est inséré à force dans le col de la préforme.

A la sortie du four, les préformes sont transférées vers une station de soufflage au moyen d'une roue de transfert. Lors du passage des préformes depuis le four jusqu'à la roue de transfert, les mandrins sont extraits du col des préformes afin que les préformes soient éjectées du dispositif de transport. Les préformes ainsi éjectées sont réceptionnées dans des encoches adaptés de la roue de transfert.

Les machines de fabrication de récipients en grande série doivent permettre un défilement des préformes à grande vitesse dans le four. Cela implique de pouvoir éjecter les préformes de leur mandrin de préhension à un rythme suffisamment rapide pour ne pas ralentir le défilement des préformes dans le four.

Dans les procédés d'éjection connus, le support mobile est muni d'une face d'éjection qui vient au contact d'une partie du buvant du col du récipient lorsque le mandrin d'éjection coulisse vers sa position haute. La préforme est alors retenue en position basse par la face d'éjection, tandis que le mandrin poursuit sont coulissement vers sa position haute jusqu'à extraction totale du mandrin à la manière d'un tire-bouchon. Ce procédé donne satisfaction car il permet une éjection rapide des préformes.

Néanmoins, il arrive que le buvant soit endommagé par son contact avec la face d'éjection.

En outre, le buvant est une partie du col qui est susceptible de venir en contact avec le liquide contenu dans le récipient final. Pour certains contenus du récipient, notamment pour un contenu alimentaire, le récipient doit respecter des normes concernant son aseptisation. Or, le contact du buvant avec la face d'éjection peut entraîner un risque de contamination du liquide contenu dans le récipient. Il est donc parfois requis d'aseptiser la face d'éjection.

En outre, le buvant du récipient est destiné à venir en contact avec une face de positionnement du mandrin pour permettre un positionnement optimal de la préforme par rapport au mandrin. Ceci assure que la préforme occupe ainsi une position verticale déterminée par rapport au mandrin, et ceci assure aussi que l'axe du col de la préforme est parfaitement coaxial avec l'axe de rotation du mandrin.

La face de positionnement présente généralement une forme annulaire de manière à venir en contact avec une portion annulaire intérieure du buvant. Ceci permet de libérer une portion annulaire extérieure du buvant pour le contact avec la face d'éjection.

Néanmoins, on a observé que le partage du buvant entre sa fonction de positionnement et sa fonction d'éjection pouvait aboutir à une mauvaise éjection de la préforme ou à un mauvais positionnement de la préforme, notamment lorsque la préforme présente un col dont la paroi est très fine.

### BREF RESUME DE L'INVENTION

L'invention propose un procédé d'éjection du type décrit précédemment, caractérisé en ce que la face de butée du col est formée par une face d'épaulement qui est en saillie radiale vers l'extérieur par rapport au buvant et qui est agencée au-dessous du buvant selon la direction verticale.

Selon une autre caractéristique du procédé, la face de butée du col est portée par une collerette qui délimite le col par rapport au reste du récipient.

L'invention propose aussi un dispositif de transport pour la mise en oeuvre du procédé selon l'invention, le dispositif de transport comportant :
- un support mobile le long d'un trajet ;
- un mandrin de préhension du récipient destiné à être emboîté verticalement avec le col, le mandrin de préhension étant monté rotatif sur le support mobile autour de son axe, le mandrin de préhension comportant une face inférieure de positionnement vertical du récipient par rapport au mandrin contre laquelle le buvant du col est destiné à être appuyé verticalement lors de son emboîtement ;
- une face inférieure d'éjection qui est montée sur le support mobile, le mandrin de préhension étant monté coulissant verticalement relativement à la face d'éjection pour permettre d'extraire totalement le mandrin du col lors de son coulissement relatif par contact de la face d'éjection avec une face supérieure de butée verticalement en vis-à-vis du col, le mandrin de préhension étant coulissant relativement à la face d'éjection entre une position inférieure de transport dans laquelle l'emboîtement du mandrin de préhension avec le col est permis, et une position supérieure d'éjection du récipient dans laquelle la face d'éjection interdit l'emboîtement du mandrin de préhension avec le col par butée contre la face de butée du col ;
caractérisé en ce qu'en position de transport du mandrin, la face d'éjection est agencée verticalement au-dessous de la face de positionnement du mandrin.

Selon d'autres caractéristiques du dispositif :
- la face d'éjection est montée fixe en rotation par rapport au support mobile ;
- le mandrin de préhension est monté coulissant verticalement sur le support mobile entre sa position inférieure de transport et sa position supérieur d'éjection ;
- la face d'éjection est portée par un bord annulaire d'extrémité inférieur d'une cloche d'éjection qui est destinée à coiffer le col du récipient lorsque le mandrin occupe sa position inférieure de transport ;
- la cloche d'éjection est montée coulissante verticalement sur le support mobile entre une position basse de coiffage du col, et une position haute escamotée ;
- le coulissement de la cloche d'éjection est commandé par le coulissement du mandrin de préhension vers une position extrême supérieure au-delà de sa position supérieure d'éjection ;
- la cloche d'éjection comporte une face inférieure d'escamotage qui est destinée à venir en contact avec une face supérieure de commande du mandrin pour permettre l'escamotage de la cloche vers sa position haute escamotée lors du coulissement du mandrin vers sa position extrême supérieure ;
- la cloche d'éjection est contrainte dans sa position basse de coiffage par un moyen de rappel élastique qui présente une raideur suffisante pour retenir la cloche d'éjection dans sa position basse de coiffage lors du coulissement du mandrin depuis sa position inférieure de transport jusqu'à sa position supérieure d'éjection lorsqu'un récipient est emboîté avec le mandrin ;
- la cloche d'éjection comporte des ouïes latérales d'aération.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective qui représente une partie d'un dispositif de transport qui est réalisé selon les enseignements de l'invention et qui porte deux préformes ;
- la figure 2 est une vue en perspective qui représente une préforme destinée à être portée par le dispositif de transport de la figure 1 ;
- la figure 3 est une vue de face qui représente le dispositif de transport de la figure 1 ;
- la figure 4 est une vue en coupe axiale selon le plan de coupe 4-4 de la figure 3 qui représente un mandrin du dispositif de transport dans une position de transport d'une préforme, une cloche d'éjection étant dans une position de coiffage du col de la préforme ;
- la figure 5 est une vue similaire à elle de la figure 4 qui représente le début de coulissement du mandrin vers le haut, une collerette du col venant en butée contre une face d'éjection de la cloche d'éjection dans sa position de coiffage ;
- la figure 6 est une vue similaire à celle de la figure 4 qui représente le mandrin dans une position supérieure d'éjection dans laquelle le mandrin est extrait du col de la préforme, le col ayant été retenu par la cloche d'éjection en position de coiffage ;
- la figure 7 est une vue similaire à celle de la figure 4 qui représente le mandrin dans une position extrême supérieure dans laquelle la cloche d'éjection est soulevée dans une position escamotée par rapport au col de la préforme.

### DESCRIPTION DETAILLEE DES FIGURES

Dans la suite de la description et dans les revendications, on adoptera de manière non limitative des directions :
- longitudinale orientée d'arrière en avant selon le sens de déplacement du support du dispositif de transport et indiquée par la flèche "L" des figures ;
- verticale orientée de bas en haut et indiquée par la flèche "V" des figures ;
- transversale orientée de gauche à droite et indiquée par la flèche "T" des figures.

La direction verticale est employée de manière non limitative à titre de repère géométrique fixe par rapport à l'axe du mandrin et sans référence à la direction de la gravité

Dans la suite de la description, des éléments présentant une structure identique ou des fonctions analogues seront désignés par une même référence.

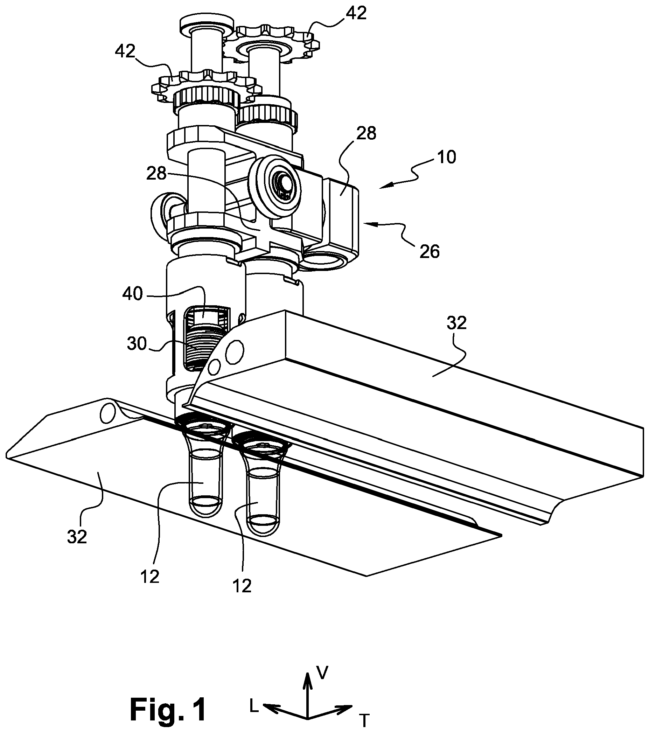

On a représenté à la figure 1 un tronçon d'un dispositif 10 de transport de préformes 12 à travers un four (non représenté) de chauffage des préformes 12. Le four fait partie d'une installation de fabrication en série de récipients en matériau thermoplastique. De manière non limitative, les récipients sont ici des bouteilles et le matériau thermoplastique est formé par du polyéthylène téréphtalate, désigné par la suite sous son acronyme "PET".

Les récipients finaux sont obtenus par formage à chaud des préformes 12 en matériau thermoplastique. Par la suite, le terme "préforme 12" sera utilisé pour désigner le récipient avant l'étape de formage. De telles préformes 12 sont généralement obtenues par injection et elles refroidissent entre leur obtention et leur passage dans le four de chauffage.

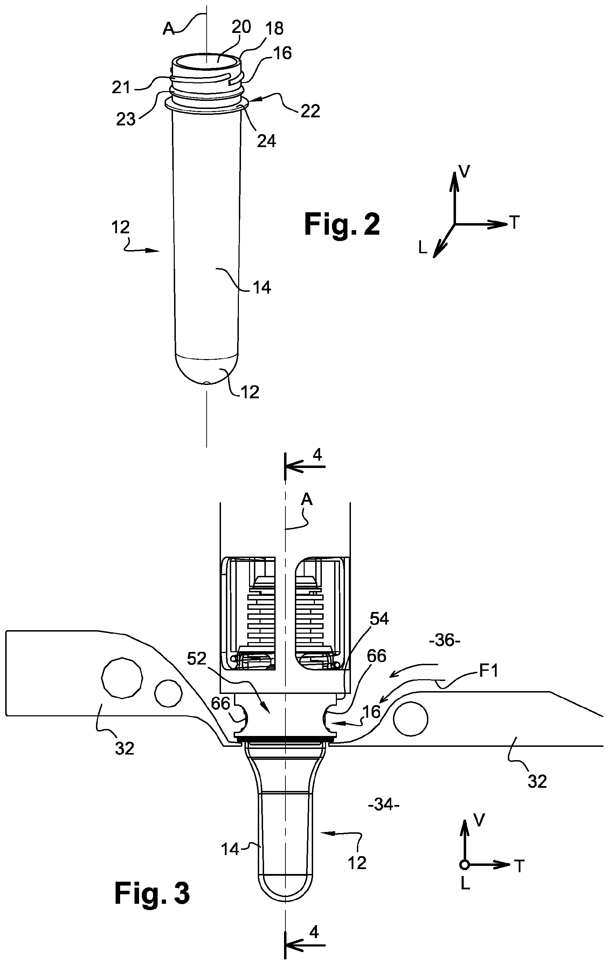

Comme représenté à la figure 2, la préforme 12 présentent un corps 14 cylindrique d'axe principal vertical "A" à paroi tubulaire fermé à son extrémité inférieure. Le corps 14 est prolongé à son autre extrémité supérieure par un col 16, lui aussi à paroi tubulaire d'axe "A" vertical. Le col 16 est généralement injecté de manière à posséder déjà sa forme définitive tandis que le corps 14 de la préforme 12 est appelé à subir une déformation relativement importante pour former le récipient final lors d'une étape ultérieure de formage.

Le col 16 est délimité verticalement vers le haut par un bord circulaire d'extrémité supérieure appelé "buvant 18". Le buvant 18 entoure ainsi un orifice 20 supérieur de la préforme 12.

Le col 16 comporte sur sa face cylindrique extérieure un filetage 21 qui fait saillie radialement pour permettre le vissage ultérieur d'un bouchon.

En variante non représentée de l'invention, le filetage est remplacé par des ergots en saillie radiale pour permettre l'emboîtement élastique du bouchon.

Le col 16 est délimité verticalement vers le bas par une collerette 22 qui s'étend radialement vers l'extérieur en saillie par rapport au buvant 18 et par rapport au filetage 21. La collerette 22 est ainsi agencé verticalement au-dessous du buvant 18. La collerette 22 présente une face d'épaulement supérieure qui s'étend radialement et qui est tournée vers le haut. Dans ce mode de réalisation de l'invention, la face d'épaulement sera appelée face 24 de butée, comme cela sera expliqué en détails par la suite.

Le col 16 comporte aussi un collet 23 qui est agencé parallèlement et au-dessus de la collerette 22. Le collet 23 fait saillie radialement vers l'extérieur par rapport au buvant 18, mais toutefois moins que la collerette 22. Ainsi, la collerette 22 demeure en saillie radialement par rapport au collet 23. Le collet 23 délimite ainsi verticalement avec la collerette une gorge destinée à recevoir une bague d'inviolabilité d'un bouchon de fermeture du récipient final.

Le dispositif 10 de transport de la figure 1 est destiné à faire défiler des préformes 12 le long d'un trajet déterminé à travers le four de chauffage. Les préformes 12 sont destinées à être chauffées le long de ce trajet.

Le dispositif 10 de transport comporte une chaîne 26 de convoyage formant une boucle fermée. Comme représenté à la figure 1, la chaîne 26 de convoyage est formée par l'articulation de maillons. Chaque maillon forme un support 28 mobile qui comporte au moins un mandrin 30 de préhension d'une préforme 12.

La chaîne 26 comporte de nombreux maillons et de nombreux mandrins 30 de préhension. Seule un tronçon de la chaîne 26 de convoyage comportant deux supports 28 mobiles et deux mandrins 30 de préhension a été représentée à la figure 1 pour des raisons de clarté. Tous les mandrins de préhension étant sensiblement identiques, un seul de ces mandrins 22 de préhension sera décrit par la suite.

Comme cela est représenté à la figure 1, le trajet des préformes 12 dans le four est bordé par deux rails 32 longitudinaux. Ces rails 32 ont notamment pour fonction de limiter l'échauffement des cols 16, et notamment de la collerette 22, afin de préserver leur intégrité. Ainsi, comme représenté à la figure 3, les rails 32 délimitent un espace 34 inférieur du four qui est chauffé par des moyens (non représentés) de chauffage, et un espace 36 supérieur du four qui est ventilé et refroidi pour maintenir le col 16 des préformes 12 à une température modérée. A cet effet, comme indiqué par les flèches "F1", de l'air frais est soufflé transversalement dans l'espace 36 supérieur par des moyens (non représentés) de ventilation.

On comprendra que les termes "supérieur" et "inférieur" sont utilisés selon l'orientation verticale du mandrin 30 de préhension, l'invention étant applicable à des dispositifs de transport permettant le renversement des préformes par pivotement des supports 28 mobile autour d'un axe longitudinal.

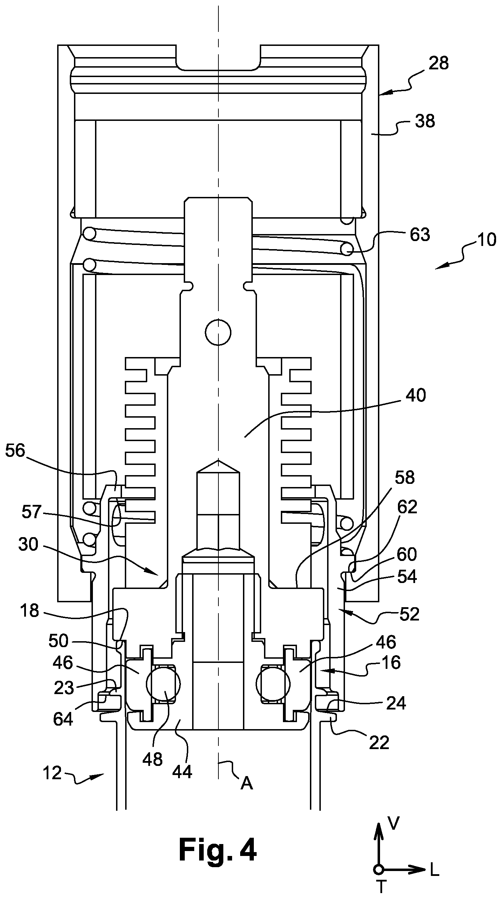

On décrit à présent plus en détails le dispositif 10 de transport en référence aux figures 4 à 7.

Le support 28 mobile comporte un manchon 38 fixe. Le manchon 38 présente un axe "A" principal vertical coaxial à l'axe du col 16 lorsque la préforme 12 est transportée par le dispositif 10 de transport.

Le mandrin 30 de préhension est fixé à l'extrémité inférieure d'un arbre 40 supérieur d'axe "A" vertical coaxial à l'axe du col 16 lorsque la préforme 12 est transportée par le dispositif 10 de transport.

L'arbre 40 est monté à rotation à l'intérieur du manchon 38. Ainsi le mandrin 30 de préhension est monté rotatif sur le support 28 mobile pour permettre la rotation de la préforme 12 autour de l'axe "A" de son col 16 lors de son transport. A cet effet, une extrémité supérieure de l'arbre 40 est accouplée avec un pignon 42 supérieur de commande de la rotation, comme représenté à la figure 1. Le pignon 42 est destiné à coopérer avec une crémaillère (non représentée) fixe installée le long du trajet.

Comme représenté à la figure 4, le mandrin 30 est destiné à être emboîté verticalement avec le col 16.

Il s'agit ici d'un mandrin 30 à expansion radial qui est inséré à force à l'intérieur du col 16, par l'orifice 20 supérieur de la préforme 12.

A cet effet, le mandrin 30 comporte une tête 44 cylindrique d'axe "A" vertical dont le diamètre extérieur est légèrement inférieur au diamètre intérieur du col 16 de manière qu'il subsiste un jeu radial de coulissement entre la tête 44 et le col 16 lorsque la tête 44 est emmanchée dans le col 16.

Le mandrin 30 comporte aussi des mors 46, ici au nombre de trois, qui se présentent sous la forme de secteurs d'anneau. Chaque mors 46 est reçu coulissant radialement dans un logement radial de la tête 44 entre :
- une position rétractée vers l'axe "A" de la tête permettant le coulissement vertical du mandrin 30 de préhension par rapport au col 16 ;
- et une position d'expansion radiale dans laquelle ils sont susceptibles d'être serrés contre la face cylindrique interne du col 16 pour retenir la préforme 12 par frottement.

Le tronçon de tête 44 comportant les mors 46 forme ainsi un tronçon actif qui est susceptible de bloquer la préforme 12.

Les mors 46 sont contraints élastiquement vers leur position d'expansion, ici au moyen d'un anneau 48 élastique qui est intercalé radialement entre le fond du logement et le mors 46.

Le bord d'extrémité inférieur de chaque mors 46 présente un chanfrein pour faciliter l'emmanchement à force du mandrin 30 de préhension dans le col 16 de la préforme.

L'invention est aussi applicable à des mandrins du même type dont l'expansion radiale est commandée entre une position de verrouillage et une position de libération du col.

En variante non représentée, le mandrin est un mandrin extérieur qui est destiné à saisir le col par sa face cylindrique extérieure. Le col est alors emboîté dans le mandrin.

La tête 44 est délimitée verticalement vers le haut par un tronçon supérieur de plus grand diamètre délimitant une face annulaire d'épaulement qui est tournée vers le bas et qui forme une face 50 inférieure de positionnement contre laquelle le buvant 18 est reçu en butée verticale lors de l'emmanchement de la tête 44 dans le col 16. Cette face 50 de positionnement permet de positionner la préforme 12 par rapport au support 28 mobile tout en assurant la coaxialité entre l'axe "A" du col 16 et l'axe "A" du mandrin 30.

Pour garantir un positionnement optimal de la préforme 12 par rapport au mandrin 30 de préhension, la face 50 de positionnement présente une largeur radiale qui est au moins égale à l'épaisseur radiale du buvant 18. Néanmoins, la collerette 22 du col 16 demeure en saillie radiale par rapport à la face 50 de positionnement lorsque la préforme 12 est emboîtée avec le mandrin 30.

Avant leur entrée dans le four, les préformes 12 sont posées sur une roue (non représentée) de transfert rotative de manière que les préformes 12 soient positionnées à distance sous le mandrin 30. Dans le présent mode de réalisation, la roue de transfert ne permet pas de faire monter les préformes 12 vers le mandrin 30 de préhension. Pour permettre l'emboîtement automatique du mandrin 30 de préhension dans le col 16 de la préforme 12, le mandrin 30 de préhension est ici monté coulissant verticalement dans le manchon 38 du support 28 mobile entre :
- une position extrême supérieure dans laquelle le mandrin 30 de préhension est agencé à distance au-dessus du col 16 lorsque la préforme 12 est posée sur la roue de transfert ;
- et une position extrême inférieure de transport dans laquelle le mandrin 30 de préhension est susceptible d'être emboîté à force dans le col 16 de la préforme 12 lorsque la préforme est posée sur la roue de transfert.

Le coulissement du mandrin 30 de préhension entre ses deux positions extrêmes est généralement commandé par une came (non représentée) qui est agencée le long du trajet du support 28 mobile et qui agit sur une extrémité supérieure de l'arbre 40.

A la sortie du four, la préforme 12 chaude doit être éjectée du dispositif 10 de transport pour être transférée vers un poste de formage, par exemple un poste de soufflage. Pour assurer une éjection rapide et sûre de la préforme 12, le mandrin 30 de préhension comporte aussi des moyens pour éjecter la préforme 12. Ces moyens d'éjection sont destinés à extraire le mandrin 30 de préhension du col 16.

Les moyens d'éjection comportent une cloche 52 d'éjection qui est montée coulissante verticalement dans le manchon 38 du support 28 mobile entre une position basse de coiffage du col 16, et une position haute escamotée. La cloche 52 d'éjection est fixe en rotation par rapport au support 28 mobile.

La cloche 52 d'éjection présente une jupe 54 cylindrique d'axe "A" coaxial à celui du mandrin 30 de préhension. La jupe 54 est interposée radialement avec jeu des deux côtés entre la tête 44 du mandrin 30 de préhension et le manchon 38. Le mandrin 30 de préhension est logé dans la cloche 52 d'éjection.

L'extrémité supérieure de la jupe 54 présente un rebord 56 annulaire qui s'étend radialement vers l'intérieur au-dessus du mandrin 30 de préhension. Ce rebord 56 entoure l'arbre 40 central du mandrin 30 de préhension. La face inférieure, dite face 57 d'escamotage, du rebord 56 est destinée à venir en butée verticale contre une face 58 supérieure radiale en vis-à-vis du mandrin 30 de préhension pour limiter le coulissement relatif du mandrin 30 de préhension vers le haut par rapport à la cloche 52 d'éjection. Comme cela sera expliqué plus en détails par la suite, le coulissement de la cloche 52 d'éjection est ainsi commandé par le coulissement du mandrin 30 de préhension vers sa position extrême supérieure en soulevant la cloche 52 d'éjection par son rebord 56.

En outre, la cloche 52 d'éjection présente aussi une face 60 inférieure d'arrêt qui s'étend radialement vers l'extérieur depuis la face cylindrique extérieure de la jupe 54. Cette face 60 d'arrêt est destinée à venir en contact contre une face 62 verticalement en vis-à-vis du manchon 38 pour limiter le coulissement vers le bas de la cloche 52 d'éjection dans sa position de coiffage par rapport au support 28 mobile. La face 60 d'arrêt est ici formée par la face annulaire inférieure d'une bague qui s'étend radialement vers l'extérieure depuis la face cylindrique extérieure de la jupe 54.

La cloche 52 d'éjection est contrainte élastiquement vers sa position inférieure de coiffage. A cet effet, des moyens de rappel élastiques, ici formés par un ressort 63 hélicoïdal qui est interposé entre la face supérieure de la bague externe de la cloche 52 et une face en vis-à-vis du support 28 mobile.

La jupe 54 comporte une face 64 inférieure d'éjection. La face 64 d'éjection est ici portée par un bord annulaire d'extrémité inférieur de la cloche 52 d'éjection. La face 64 d'éjection est destinée à être agencée verticalement en vis-à-vis de la face 24 de butée de la collerette 22 du col 16.

La face 64 annulaire d'éjection de la cloche 52 présente un diamètre intérieur qui est supérieur au diamètre extérieur du buvant 18. Plus particulièrement, la face 64 d'éjection présente ici un diamètre intérieur qui est supérieur au diamètre extérieur du collet 23. De plus, la hauteur verticale entre la face 64 d'éjection et le rebord 56 de la cloche 52 d'éjection est supérieure à la hauteur du col 16 entre la face 24 de butée et le buvant 18. Ainsi, la cloche 52 d'éjection présente une forme telle que, lorsque la face 64 d'éjection est appliquée verticalement contre la face 24 de butée de la collerette 22, la cloche 52 coiffe la totalité du col 16, sans venir en contact avec le buvant 18 ou avec tout autre élément du col 16 que la collerette 22.

En position basse de transport du mandrin 30 de préhension, la cloche 52 d'éjection est contrainte vers sa position de coiffage. Dans cette position, la face 64 d'éjection de la cloche 52 d'éjection est agencée verticalement au-dessous de la face 50 de positionnement du mandrin 30 de préhension. Ainsi, la face 64 d'éjection est à proximité immédiate de la collerette 22, permettant une éjection rapide de la préforme 12 en sortie de four, comme cela sera expliqué plus en détails par la suite.

Toutefois, en position basse de transport du mandrin 30 de préhension, un jeu vertical est ménagé entre la face 64 d'éjection et la collerette 22 pour permettre la rotation de la préforme 12 sans frottement sur la cloche 52 d'éjection, tandis que la cloche 52 d'éjection demeure fixe en rotation par rapport au support 28 mobile.

Selon une variante non représentée de l'invention, la face de butée du col est formée par la face supérieure du collet.

Comme représenté à la figure 4, lors du transport de la préforme 12, la cloche 52 d'éjection coiffe le col 16, apportant ainsi au col 16 une protection thermique contre la chaleur du four.

Néanmoins, pour permettre le refroidissement du col 16 par l'air de ventilation, la jupe 54 de la cloche 52 d'éjection est ajourée avec des ouïes 66 latérales d'aération, comme cela est représenté à la figure 3. Les ouïes 66 latérale sont ouverte transversalement de part et d'autre de la jupe 54 pour permettre le passage transversal de l'air de ventilation.

On décrit à présent le procédé d'éjection de la préforme 12 mettant en oeuvre le dispositif 10 de transport précédemment décrit.

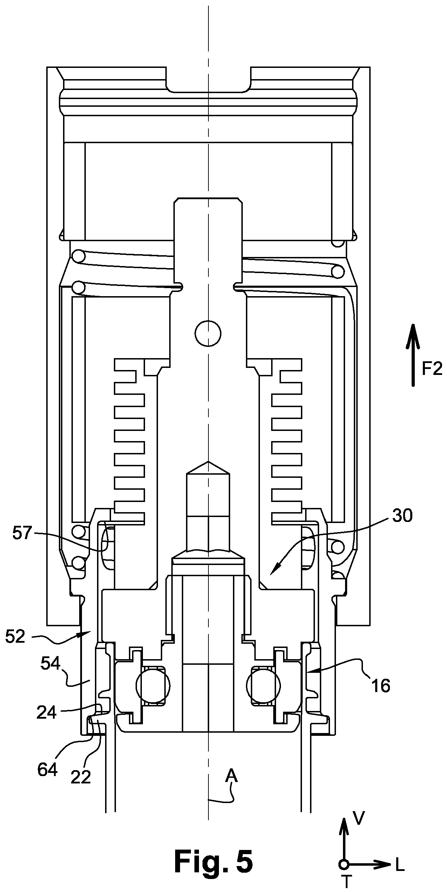

Comme représenté à la figure 5, le mandrin 30 de préhension est commandé en coulissement vers sa position extrême supérieure, comme indiqué par la flèche "F2". La préforme 12 étant toujours emboîtée avec le mandrin 30 de préhension, le col 16 est aussi coulissé verticalement vers le haut jusqu'à ce que la face 24 de butée de la collerette 22 soit en butée contre la face 64 d'éjection de la cloche 52 d'éjection. La cloche 52 d'éjection est ainsi en contact uniquement avec la face 24 de butée de la collerette 22, le buvant 18 du col 16 étant en contact uniquement avec la face 50 de positionnement du mandrin 30 de préhension.

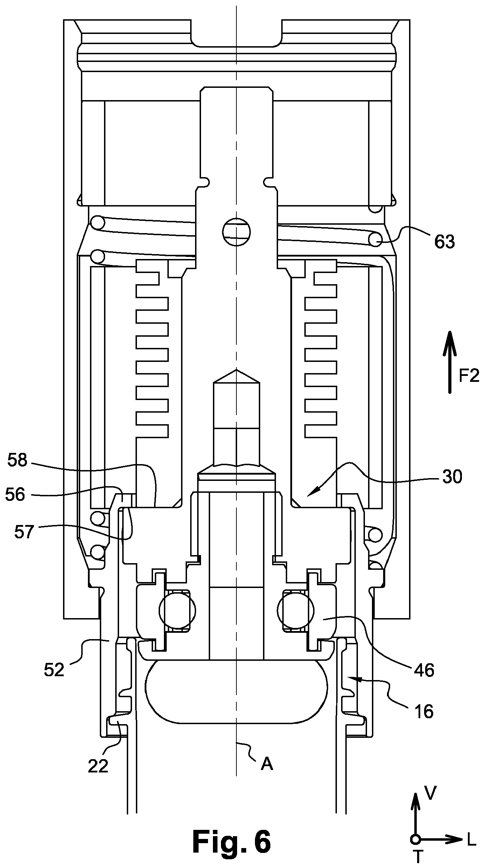

Le coulissement vers le haut du mandrin 30 de préhension se poursuit, comme indiqué par la flèche "F2" de la figure 6. Ce faisant, la collerette 22 tend à appuyer verticalement contre la face 64 d'éjection de la cloche 52 d'éjection. Le ressort 63 présente une raideur suffisante pour s'opposer au déplacement de la cloche 52 d'éjection. Le ressort 63 oppose plus particulièrement une force supérieure à la force de frottement exercé par les mors 46 du mandrin 30 de préhension contre la face cylindrique intérieure du col 16.

Ainsi, la préforme 12 est retenue par la cloche 52 d'éjection tandis que le coulissement du mandrin 30 de préhension se poursuit. Le mandrin 30 de préhension, ou tout au moins son tronçon actif, est ainsi entièrement extrait du col 16 de la préforme lorsque le mandrin 30 atteint une position supérieure d'éjection. Cette position supérieure d'éjection est intermédiaire entre la position extrême inférieure de transport et la position extrême supérieure. La préforme 12 n'est alors plus tenue par le mandrin 30 de préhension.

En position supérieure d'éjection du mandrin 30 de préhension, l'emboîtement du mandrin 30 de préhension dans le col 16 de la préforme est ainsi interdit par la face 64 d'éjection de la cloche 52 d'éjection

Dans le mode de réalisation représenté aux figures, la préforme 12 est éjectée au-dessus d'un emplacement de réception d'une roue (non représentée) de transfert. La préforme 12 est alors posée sur la roue de transfert par l'intermédiaire de sa collerette 22.

Dans cette position d'éjection, la face 58 supérieure du mandrin 30 de préhension, entre en contact avec le rebord 56 supérieur de la cloche 52 d'éjection. La cloche 52 d'éjection occupe toujours sa position inférieure de coiffage sous l'effet du ressort 63.

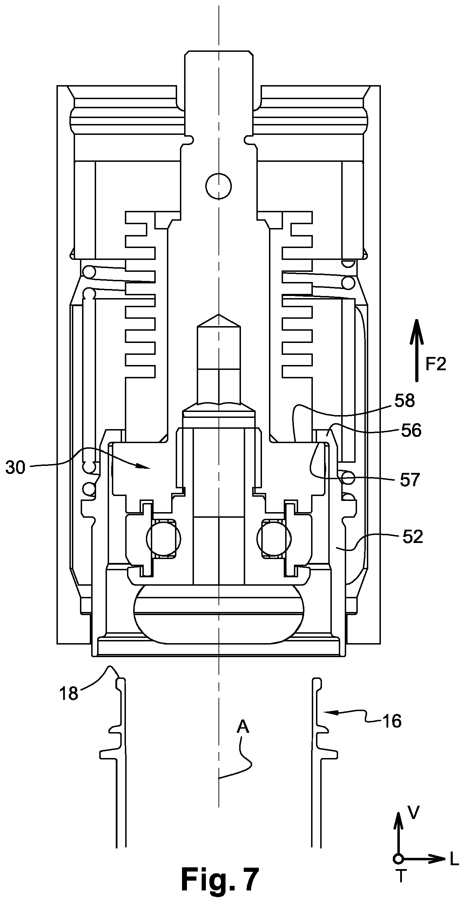

La roue de transfert est destinée à évacuer la préforme 12 latéralement par rapport à l'axe "A" du mandrin 30 de préhension. Cependant, la cloche 52 occupant sa position de coiffage, la jupe 54 empêche le dégagement latéral de la préforme 12. Pour permettre l'évacuation latérale de la préforme 12, le mandrin 30 de préhension poursuit son coulissement vertical vers le haut jusqu'à sa position extrême supérieure comme représenté à la figure 7. Ce faisant, le mandrin 30 de préhension soulève la cloche 52 d'éjection vers sa position supérieure escamotée par l'intermédiaire du rebord 56.

Dans cette position d'escamotage de la cloche 52 d'éjection, le bord d'extrémité inférieur de la cloche 52 est soulevé verticalement au-dessus du buvant 18 du col 16. La préforme 12 est alors libre d'être évacuée latéralement par rapport au dispositif 10 de transport, comme indiqué par la flèche "F3" de la figure 7.

Le procédé d'éjection réalisé selon les enseignements de l'invention et le dispositif 10 de transport pour sa mise en oeuvre permettent d'éjecter les préformes 12 de manière sûre et rapide tout en permettant un positionnement optimal de la préforme 12 sur le mandrin 30 de préhension.

En outre, la cloche 52 d'éjection permet, outre sa fonction d'éjection, de protéger plus efficacement le col 16 de la préforme 12 d'un chauffage intempestif. La cloche 52 d'éjection permet ainsi d'assurer une protection plus efficace du col 16 pour préserver son intégrité.

## Revendications

1. Procédé d'éjection d'un récipient (12), notamment d'une préforme (12) en matériau thermoplastique, porté par un dispositif (10) de transport, dans lequel le récipient (12) est muni d'un col (16) cylindrique d'axe (A) vertical comportant un bord d'extrémité supérieure libre appelé buvant (18), le dispositif (10) de transport comportant :
- au moins un support (28) mobile le long d'un trajet ;
- au moins un mandrin (30) de préhension du récipient (12) par emboîtement vertical avec le col (16) ;
- une face (64) inférieure d'éjection qui est montée sur le support (28) mobile, le mandrin (30) de préhension étant monté coulissant verticalement relativement à la face (64) d'éjection pour permettre d'extraire le mandrin (30) de préhension du col (16) lors de son coulissement relatif par contact de la face (64) d'éjection avec une face (24) supérieure de butée verticalement en vis-à-vis du col (16), le mandrin (30) de préhension étant coulissant relativement à la face (64) d'éjection entre une position inférieure de transport dans laquelle l'emboîtement du mandrin (30) de préhension avec le col (16) est permis, et une position supérieure d'éjection du récipient (12) dans laquelle la face (64) d'éjection interdit l'emboîtement du mandrin (30) de préhension avec le col (16) par butée contre la face (24) de butée du col (16) ;
**caractérisé en ce que** la face (24) de butée du col (16) est formée par une face d'épaulement qui est en saillie radiale vers l'extérieur par rapport au buvant (18) et qui est agencée au-dessous du buvant (18) selon la direction verticale.

2. Procédé selon la revendication précédente, **caractérisé en ce que** la face (24) de butée du col (16) est portée par une collerette (22) qui délimite le col (16) par rapport au reste du récipient (12).

3. Dispositif (10) de transport comportant :
- un support (28) mobile le long d'un trajet ;
- un mandrin (30) de préhension du récipient (12) destiné à être emboîté verticalement avec le col (16), le mandrin (30) de préhension étant monté rotatif sur le support (28) mobile autour de son axe (A), le mandrin (30) de préhension comportant une face (50) inférieure de positionnement vertical du récipient (12) par rapport au mandrin (30) contre laquelle le buvant (18) du col (16) est destiné à être appuyé verticalement lors de son emboîtement ;
- une face (64) inférieure d'éjection qui est montée sur le support (28) mobile, le mandrin (30) de préhension étant monté coulissant verticalement relativement à la face (64) d'éjection pour permettre d'extraire totalement le mandrin (30) du col (16) lors de son coulissement relatif par contact de la face (64) d'éjection avec une face (24) supérieure de butée verticalement en vis-à-vis du col (16), le mandrin (30) de préhension étant coulissant relativement à la face (64) d'éjection entre une position inférieure de transport dans laquelle l'emboîtement du mandrin (30) de préhension avec le col (16) est permis, et une position supérieure d'éjection du récipient (12) dans laquelle la face (64) d'éjection interdit l'emboîtement du mandrin (30) de préhension avec le col (16) par butée contre la face (24) de butée du col (16) ;
**caractérisé en ce qu'**en position de transport du mandrin (30), la face (64) d'éjection est agencée verticalement au-dessous de la face (50) de positionnement du mandrin (30) et **en ce que** le dispositif (10) de transport est apte à la mise en oeuvre du procédé selon l'une quelconque des revendications précédentes.

4. Dispositif (10) selon la revendication précédente, **caractérisé en ce que** la face (64) d'éjection est montée fixe en rotation par rapport au support (28) mobile.

5. Dispositif (10) selon l'une quelconque des revendications 3 ou 4, **caractérisé en ce que** le mandrin (30) de préhension est monté coulissant verticalement sur le support (28) mobile entre sa position inférieure de transport et sa position supérieur d'éjection.

6. Dispositif (10) selon l'une quelconque des revendications 3 à 5, **caractérisé en ce que** la face (64) d'éjection est portée par un bord annulaire d'extrémité inférieur d'une cloche (52) d'éjection qui est destinée à coiffer le col (16) du récipient (12) lorsque le mandrin (30) occupe sa position inférieure de transport.

7. Dispositif (10) selon la revendication précédente, **caractérisé en ce que** la cloche (52) d'éjection est montée coulissante verticalement sur le support (28) mobile entre une position basse de coiffage du col (16), et une position haute escamotée.

8. Dispositif (10) selon la revendication précédente pris en combinaison avec la revendication 5, **caractérisé en ce que** le coulissement de la cloche (52) d'éjection est commandé par le coulissement du mandrin (30) de préhension vers une position extrême supérieure au-delà de sa position supérieure d'éjection.

9. Dispositif (10) selon la revendication précédente, **caractérisé en ce que** la cloche (52) d'éjection comporte une face (57) inférieure d'escamotage qui est destinée à venir en contact avec une face (58) supérieure de commande du mandrin (30) pour permettre l'escamotage de la cloche (52) vers sa position haute escamotée lors du coulissement du mandrin (30) vers sa position extrême supérieure.

10. Dispositif selon la revendication précédente, **caractérisé en ce que** la cloche (52) d'éjection est contrainte dans sa position basse de coiffage par un moyen (63) de rappel élastique qui présente une raideur suffisante pour retenir la cloche (52) d'éjection dans sa position basse de coiffage lors du coulissement du mandrin (30) depuis sa position inférieure de transport jusqu'à sa position supérieure d'éjection lorsqu'un récipient (12) est emboîté avec le mandrin (30).

11. Dispositif (10) selon l'une quelconque des revendications 6 à 10, **caractérisé en ce que** la cloche (52) d'éjection comporte des ouïes (66) latérales d'aération.

## Patentansprüche

1. Verfahren zum Auswerfen eines Behälters (12), insbesondere eines Vorformlings (12) aus thermoplastischem Material, welcher von einer Transportvorrichtung (10) getragen wird, bei welcher der Behälter (12) mit einem zylindrischen Hals (16) mit vertikaler Achse (A) versehen ist, welcher einen oberen, freien Endrand aufweist, welcher Trinkrand (18) genannt wird, wobei die Transportvorrichtung (10) Folgendes aufweist:
- mindestens einen entlang einer Bahn beweglichen Träger (28);
- mindestens einen Dorn (30) zum Halten des Behälters (12) durch vertikale Verschachtelung mit dem Hals (16);
- eine untere Auswurffläche (64), welche an dem beweglichen Träger (28) montiert ist, wobei der Haltedorn (30) in Bezug auf die Auswurffläche (64) senkrecht verschiebbar montiert ist, um es zu ermöglichen, den Haltedorn (30) bei seiner relativen Gleitbewegung durch Kontakt der Auswurffläche (64) mit einer oberen Anschlagfläche (24), welche dem Hals (16) vertikal gegenüber liegt, aus dem Hals (16) herauszuziehen, wobei der Haltedorn (30) in Bezug auf die Auswurffläche (64) zwischen einer unteren Transportposition, in welcher die Verschachtelung des Haltedorns (30) mit dem Hals (16) zugelassen wird, und einer oberen Position zum Auswerfen des Behälters (12) verschiebbar ist, in welcher die Auswurffläche (64) die Verschachtelung des Haltedorns (30) mit dem Hals (16) durch Anschlag des Halses (16) gegen die Anschlagfläche (24) untersagt;
**dadurch gekennzeichnet, dass** die Anschlagfläche (24) des Halses (16) von einer Schulterfläche gebildet wird, welche radial in Richtung auf den äußeren Bereich in Bezug auf den Trinkrand (18) vorspringt und welche unterhalb des Trinkrandes (18) gemäß der vertikalen Richtung angeordnet ist.

2. Verfahren nach dem vorhergehenden Anspruch, **dadurch gekennzeichnet, dass** die Anschlagfläche (24) des Halses (16) von einem Bund (22) getragen wird, welcher den Hals (16) in Bezug auf den Rest des Behälters (12) abgrenzt.

3. Transportvorrichtung (10), aufweisend:
- einen entlang einer Bahn beweglichen Träger (28);
- einen Dorn (30) zum Halten des Behälters (12), welcher dafür vorgesehen ist, senkrecht mit dem Hals (16) verschachtelt zu sein, wobei der Haltedorn (30) drehbar um seine Achse (A) an dem beweglichen Träger (28) montiert ist, wobei der Haltedorn (30) eine untere Fläche (50) zur vertikalen Positionierung des Behälters (12) in Bezug auf den Dorn (30) aufweist, gegen welche der Trinkrand (18) des Halses (16) vorgesehen ist, sich vertikal bei seiner Verschachtelung abzustützen;
- eine untere Auswurffläche (64), welche an dem beweglichen Träger (28) montiert ist, wobei der Haltedorn (30) in Bezug auf die Auswurffläche (64) senkrecht verschiebbar montiert ist, um es zu ermöglichen, den Dorn (30) bei seiner relativen Gleitbewegung durch Kontakt der Auswurffläche (64) mit einer oberen Anschlagfläche (24), welche dem Hals (16) vertikal gegenüber liegt, vollständig aus dem Hals (16) herauszuziehen, wobei der Haltedorn (30) in Bezug auf die Auswurffläche (64) zwischen einer unteren Transportposition, in welcher die Verschachtelung des Haltedorns (30) mit dem Hals (16) zugelassen wird, und einer oberen Position zum Auswerfen des Behälters (12) verschiebbar ist, in welcher die Auswurffläche (64) die Verschachtelung des Haltedorns (30) mit dem Hals (16) durch Anschlag des Halses (16) gegen die Anschlagfläche (24) untersagt;
**dadurch gekennzeichnet, dass** in Transportposition des Dorns (30) die Auswurffläche (64) senkrecht über der Positionierungsfläche (50) des Dorns (30) angeordnet ist, und dass die Transportvorrichtung (10) für die Durchführung des Verfahrens nach einem der vorhergehenden Ansprüche geeignet ist.

4. Vorrichtung (10) nach dem vorhergehenden Anspruch, **dadurch gekennzeichnet, dass** die Auswurffläche (64) drehfest in Bezug auf den beweglichen Träger (28) montiert ist.

5. Vorrichtung (10) nach einem der Ansprüche 3 oder 4, **dadurch gekennzeichnet, dass** der Haltedorn (30) auf dem beweglichen Träger (28) zwischen seiner unteren Transportposition und seiner oberen Auswurfposition vertikal verschiebbar montiert ist.

6. Vorrichtung (10) nach einem der Ansprüche 3 bis 5, **dadurch gekennzeichnet, dass** die Auswurffläche (64) von einem unteren, ringförmigen Rand einer Auswurfglocke (52) getragen wird, welche dafür vorgesehen ist, den Hals (16) des Behälters (12) zu bedecken, wenn der Dorn (30) seine untere Transportposition einnimmt.

7. Vorrichtung (10) nach dem vorhergehenden Anspruch, **dadurch gekennzeichnet, dass** die Auswurfglocke (52) auf dem beweglichen Träger (28) zwischen einer unteren Position zur Bedeckung des Halses (16) und einer oberen, eingefahrenen Position vertikal verschiebbar montiert ist.

8. Vorrichtung (10) nach dem vorhergehenden Anspruch in Kombination mit dem Anspruch 5, **dadurch gekennzeichnet, dass** die Verschiebung der Auswurfglocke (52) durch die Verschiebung des Haltedorns (30) in Richtung auf eine obere Extremposition über seine obere Auswurfposition hinaus gesteuert wird.

9. Vorrichtung (10) nach dem vorhergehenden Anspruch, **dadurch gekennzeichnet, dass** die Auswurfglocke (52) eine untere Einfahrfläche (57) aufweist, welche dafür vorgesehen ist, mit einer oberen Steuerfläche (58) des Dorns (30) in Kontakt zu kommen, um das Einfahren der Glocke (52) in Richtung auf ihre obere, eingefahrene Position beim Verschieben des Dorns (30) in Richtung auf seine obere Extremposition zu ermöglichen.

10. Vorrichtung nach dem vorhergehenden Anspruch, **dadurch gekennzeichnet, dass** die Auswurfglocke (52) in ihre untere Position zur Bedeckung durch ein elastisches Rückstellmittel (63) belastet ist, welches eine Steifheit besitzt, die ausreichend ist, um die Auswurfglocke (52) bei der Verschiebung des Dorns (30) aus seiner unteren Transportposition in seine obere Auswurfposition in ihrer unteren Position zur Bedeckung zurückzuhalten, wenn ein Behälter (12) mit dem Dorn (30) verschachtelt ist.

11. Vorrichtung (10) nach einem der Ansprüche 6 bis 10, **dadurch gekennzeichnet, dass** die Auswurfglocke (52) seitliche Lüftungsschlitze (66) aufweist.

## Claims

1. Method for ejecting a vessel (12), in particular a preform (12) made of thermoplastic material, carried by a transporting device (10), in which the vessel (12) is provided with a cylindrical neck (16) having a vertical axis (A) and comprising a free upper terminal edge called a mouth (18), the transporting device (10) comprising:
- at least one support (28) which is movable along a path;
- at least one mandrel (30) for gripping the vessel (12) by vertical engagement with the neck (16);
- a lower ejection face (64) which is mounted on the movable support (28), the gripping mandrel (30) being mounted so as to slide vertically relative to the ejection face (64) to allow the gripping mandrel (30) to be extracted from the neck (16) during the relative sliding thereof, by contact of the ejection face (64) with an upper bearing face (24) vertically opposite the neck (16), the gripping mandrel (30) being slidable relative to the ejection face (64) between a lower transport position in which the engagement of the gripping mandrel (30) with the neck (16) is permitted, and an upper ejection position of the vessel (12) in which the ejection face (64) prevents the engagement of the gripping mandrel (30) with the neck (16) by abutment against the bearing face (24) of the neck (16) ;
**characterized in that** the bearing face (24) of the neck (16) is formed by a shoulder face which protrudes radially outward relative to the mouth (18) and which is arranged below the mouth (18) in the vertical direction.

2. Method according to the preceding claim, **characterized in that** the bearing face (24) of the neck (16) is carried by a collar (22) which delimits the neck (16) relative to the remainder of the vessel (12).

3. Transporting device (10) comprising:
- a support (28) which is movable along a path;
- a mandrel (30) for gripping the vessel (12) designed to be vertically engaged with the neck (16), the gripping mandrel (30) being rotatably mounted on the movable support (28) about its axis (A), the gripping mandrel (30) comprising a lower face (50) for vertical positioning of the vessel (12) relative to the mandrel (30), the mouth (18) of the neck (16) being designed to be supported vertically thereagainst during the engagement thereof;
- a lower ejection face (64) which is mounted on the movable support (28), the gripping mandrel (30) being mounted so as to slide vertically relative to the ejection face (64) to allow the gripping mandrel (30) to be fully extracted from the neck (16) during the relative sliding thereof, by contact of the ejection face (64) with an upper bearing face (24) vertically opposite the neck (16), the gripping mandrel (30) being slidable relative to the ejection face (64) between a lower transport position in which the engagement of the gripping mandrel (30) with the neck (16) is permitted, and an upper ejection position of the vessel (12) in which the ejection face (64) prevents the engagement of the gripping mandrel (30) with the neck (16) by abutment against the bearing face (24) of the neck (16) ;
**characterized in that** in the transport position of the mandrel (30), the ejection face (64) is arranged vertically below the positioning face (50) of the mandrel (30) and **in that** the transporting device (10) is capable of implementing the method according to any one of the preceding claims.

4. Device (10) according to the preceding claim, **characterized in that** the ejection face (64) is mounted fixedly in terms of rotation relative to the movable support (28).

5. Device (10) according to any one of Claims 3 or 4, **characterized in that** the gripping mandrel (30) is mounted so as to slide vertically in the movable support (28) between its lower transport position and its upper ejection position.

6. Device (10) according to any one of Claims 3 to 5, **characterized in that** the ejection face (64) is carried by a lower annular terminal edge of an ejection bell (52) which is designed to cover the neck (16) of the vessel (12) when the mandrel (30) occupies its lower transport position.

7. Device (10) according to the preceding claim, **characterized in that** the ejection bell (52) is mounted so as to slide vertically on the movable support (28) between a lower position for covering the neck (16) and an upper retracted position.

8. Device (10) according to the preceding claim, taken in combination with Claim 5, **characterized in that** the sliding of the ejection bell (52) is controlled by the sliding of the gripping mandrel (30) toward an upper end position beyond its upper ejection position.

9. Device (10) according to the preceding claim, **characterized in that** the ejection bell (52) comprises a lower retracted face (57) which is designed to come into contact with an upper face (58) for controlling the mandrel (30) in order to permit the retraction of the bell (52) into its upper retracted position when the mandrel (30) slides toward its upper end position.

10. Device according to the preceding claim, **characterized in that** the ejection bell (52) is forced into its lower covering position by a resilient restoring means (63) which has a sufficient stiffness in order to retain the ejection bell (52) in its lower covering position when the mandrel (30) slides from its lower transport position to its upper ejection position when a vessel (12) is engaged with the mandrel (30).

11. Device (10) according to any one of Claims 6 to 10, **characterized in that** the ejection bell (52) comprises lateral aeration louvres (66).
